# EUROPEAN PATENT SPECIFICATION

(11) **EP 3 168 577 B1**
(45) Date of publication and mention of the grant of the patent: **26.06.2019**
(21) Application number: 15194592.0
(22) Date of filing: 13.11.2015
(51) Int. Cl.: G01D 21/02

(54) **A MULTIFUNCTIONAL SENSOR APPARATUS AND ASSOCIATED METHODS**
MULTIFUNKTIONELLE SENSORVORRICHTUNG UND ZUGEHÖRIGE VERFAHREN
APPAREIL CAPTEUR MULTIFONCTIONNEL ET PROCÉDÉS ASSOCIÉS

(43) Date of publication of application: 17.05.2017
(73) Proprietor: Provenance Asset Group LLC, Pittsford, NY 14534 (US)
(72) Inventor: Bessonov, Alexander, Cambridge, CB1 3HR (GB); Allen, Mark, Cambridge, Cambridgeshire CB23 6BA (GB)
(74) Representative: Potter Clarkson

(56) References cited:
- WO-A1-2015/000009
- WO-A2-2012/156126

## Description

### Technical Field

The present disclosure relates particularly to sensors, associated methods and apparatus. Certain embodiments specifically concern an apparatus comprising a primary sensor and one or more secondary sensors coupled to a common memristor such that exposure of the primary sensor to its respective stimulus causes the memristor to switch from a high resistance state to a low resistance state thereby allowing the one or more secondary sensors to sense their respective stimuli. Some embodiments may relate to portable electronic devices, in particular, so-called hand-portable electronic devices which may be hand-held in use (although they may be placed in a cradle in use). Such hand-portable electronic devices include so-called Personal Digital Assistants (PDAs) and tablet PCs.

The portable electronic devices/apparatus according to one or more disclosed example aspects/embodiments may provide one or more audio/text/video communication functions (e.g. tele-communication, video-communication, and/or text transmission, Short Message Service (SMS)/ Multimedia Message Service (MMS)/emailing functions, interactive/non-interactive viewing functions (e.g. web-browsing, navigation, TV/program viewing functions), music recording/playing functions (e.g. MP3 or other format and/or (FM/AM) radio broadcast recording/playing), downloading/sending of data functions, image capture function (e.g. using a (e.g. in-built) digital camera), and gaming functions.

### Background

Research is currently being done to develop new sensor devices.

WO2015/000009A1 describes a storage device-sensor arrangement (1) with a sensor element (2) and a storage device, which is characterized by at least one series circuit of a sensor element (2) which varies its resistance under the influence of physical and/or chemical values to be detected, with a multistable electric cell (3) which varies its resistance value when defined voltages are applied and retains it even if these defined voltages are absent.

WO2012/156126A2 describes a sensor element (10) having at least one piezoelectric transducer (11), said piezoelectric transducer (11) being coupled to at least one memristor (20). This document further describes a sensor having an array of a plurality of pixels, at least one of the pixels comprising a sensor element (10).

The listing or discussion of a prior-published document or any background in this specification should not necessarily be taken as an acknowledgement that the document or background is part of the state of the art or is common general knowledge.

### Summary

The present invention comprises an apparatus as defined in appended claim 1.

The apparatus may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a multifunctional sensor, and a module for one or more of the same.

According to a further aspect, there is provided a method of using an apparatus according to claim 13.

According to a further aspect, there is provided a method of making an apparatus according to claim 14.

The steps of any method disclosed herein do not have to be performed in the exact order disclosed, unless explicitly stated or understood by the skilled person.

A computer program product is defined in claim 15.
The dependent claims define further advantageous embodiments.

The computer program may, when run on a computer, cause the computer to configure any apparatus, including a battery, circuit, controller, or device disclosed herein or perform any method disclosed herein. One or more of the computer programs may be software implementations, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The above summary is intended to be merely exemplary and non-limiting.

### Brief Description of the Figures

A description is now given, by way of example only, with reference to the accompanying drawings, in which:-
Figure 1a shows one example of the present apparatus (schematic);
Figure 1b shows how the resistances of the first and second circuit portions of Figure 1a vary on exposure to the respective stimuli;
Figure 2a shows another example of the present apparatus (plan view);
Figure 2b shows the apparatus of Figure 2a in cross-section;
Figure 3 shows another example of the present apparatus in which each sensor forms part of a resistive bridge circuit (schematic);
Figure 4 shows a method of making the present apparatus (perspective);
Figure 5 shows another example of the present apparatus (schematic);
Figure 6a shows a method of using the present apparatus;
Figure 6b shows a method of making the present apparatus; and
Figure 7 shows a computer-readable medium comprising a computer program configured to perform, control or enable a method described herein (schematic).

### Description of Specific Aspects/Embodiments

Existing sensors typically comprise an active layer and two or three electrodes dedicated to the sensing of a particular stimulus. When a situation requires the sensing of multiple stimuli, a plurality of these dedicated sensors would normally need to be used, each with its own respective circuitry (e.g. microprocessor, analogue-to-digital converter and electrical connections). This approach is energy consuming and leads to high circuit complexity caused by the number of components and amount of wiring. Such circuity also tends to be relatively bulky which inhibits device miniaturisation.

There will now be described an apparatus and associated methods that may address this issue.

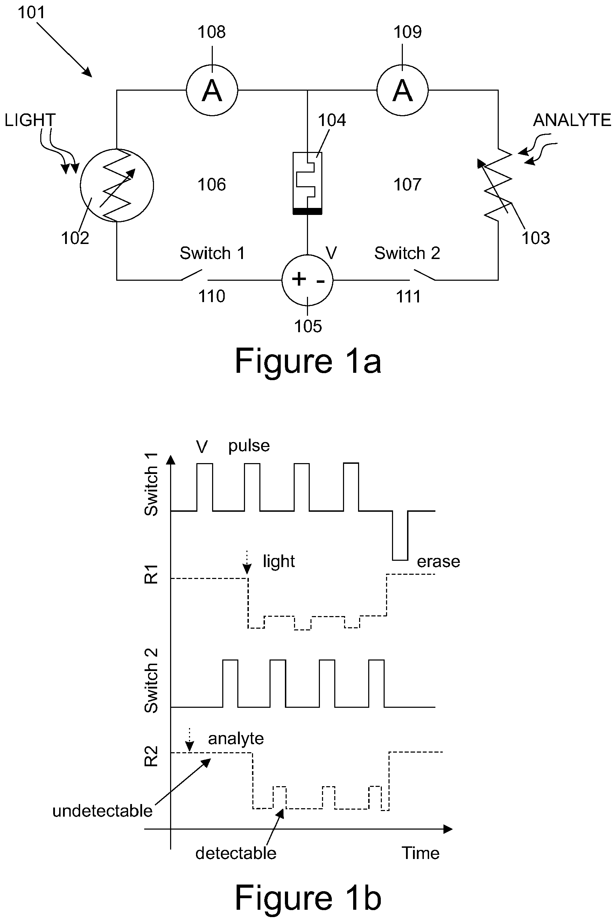

Figure 1a shows one example of the present apparatus 101. The apparatus 101 comprises a primary sensor 102 and one or more secondary sensors 103 (in this case only one secondary sensor 103 is used) each configured to sense different physical stimuli when connected to a power supply, a memristor 104, and a power supply 105. The primary sensor 102 and one or more secondary sensors 103 are coupled to the memristor 104 such that exposure of the primary sensor 102 to its respective stimulus causes the memristor 104 to switch from a high resistance state to a low resistance state resulting in connection of the power supply 105 to the one or more secondary sensors 103 to enable the sensing of their respective stimuli.

In this example, the primary sensor 102 is a light sensor configured to sense one or more of the presence and magnitude of incident electromagnetic radiation, and the secondary sensor 103 is an analyte sensor configured to sense one or more of the presence and magnitude of a chemical or biological species. Furthermore, the primary sensor 102 is a resistive sensor configured to exhibit a decrease in resistance on exposure to the incident electromagnetic radiation, the decrease in resistance allowing a voltage from the power supply 105 to be applied to the memristor 104 to switch the memristor 104 from the high resistance state to the low resistance state (like a voltage divider).

As can be seen in Figure 1, the primary sensor 102 forms part of a first circuit portion 106 in combination with the memristor 104, the power supply 105, a first switch 110 (Switch 1) and a first ammeter 108, whilst the secondary sensor 103 forms part of a second circuit portion 107 in combination with the memristor 104, the power supply 105, a second switch 111 (Switch 2) and a second ammeter 109. The first 110 and second 111 switches are used to connect the power supply 105 to one circuit portion 106, 107 at a time so that the output of the primary sensor 102 (e.g. current or resistance) does not affect the output of the secondary sensor 103 (e.g. current or resistance) and vice versa. In this way, each sensor 102, 103 can be read out independently.

Figure 1b shows how the respective resistances R1, R2 of the first 106 and second 107 circuit portions of Figure 1a vary on exposure to the respective stimuli. Initially, the memristor 104 is in the high resistance state (e.g. having a resistance of 10⁶-10⁸Ω). Voltage pulses Vₚᵤₗₛₑ are alternately applied from the power supply 105 to the first 106 and second 107 circuit portions by opening and closing the first 110 and second 111 switches. In the absence of incident electromagnetic radiation, the resistance of the primary sensor 102 is relatively high and the voltage applied to the memristor 104 when the first switch 110 is closed is below the threshold voltage of the memristor 104 (0.1-5V depending on one or more of the memristor materials, dimensions and fabrication conditions). As a result, the memristor 104 remains in the high resistance state which prevents readout of the primary sensor 102 (i.e. the memristor 104 effectively acts as a break in the first circuit portion 106). Furthermore, because the memristor 104 is in the high resistance state, the secondary sensor 103 cannot be read out when the second switch 111 is closed (i.e. the memristor 104 effectively acts as a break in the second circuit portion 107), regardless of whether or not the secondary sensor 103 is exposed to the chemical or biological species. The resistances R1 and R2 of the first 106 and second 107 circuit portions are therefore relatively high at this moment in time.

Once the primary sensor 102 is exposed to incident electromagnetic radiation, however, the resistance of the primary sensor 102 decreases causing a voltage to be applied from the power supply 105 to the memristor 104 which exceeds the threshold voltage of the memristor 104. This causes the memristor 104 to switch from the high resistance state to the low resistance state (e.g. having a resistance of 10²-10³Ω) allowing readout of the primary sensor 102 when the first switch 110 is closed (since the effective break in the first circuit portion 106 has now been removed). When the second switch 111 is closed, the low resistance state of the memristor 104 also allows the secondary sensor 103 to be read out (since the effective break in the second circuit portion 107 has also been removed). The resistances R1, R2 of the first 106 and second 107 circuit portions are therefore lower than they were before exposure of the primary sensor 102 to the incident electromagnetic radiation. Furthermore, detectable changes in the resistances R1, R2 of the first 106 and second 107 circuit portions now occur each time the respective switches 110, 111 are closed in response to the physical stimuli. The output signal from each sensor 102, 103 may comprise one or more of the resistance value R1, R2 itself and the current flowing through the respective circuit portion 106, 107 as measured by the first 108 or second 109 ammeter.

Once the primary 102 and secondary 103 sensors have been read out, the memristor 104 may be switched back from the low resistance state to the high resistance state (i.e. reset) ready for future sensing operations. This may be achieved by applying a reverse voltage above a predefined threshold to the memristor 104. Alternatively, the memristor 104 may be configured to switch back from the low resistance state to the high resistance state automatically after a predefined period of time following removal of the applied voltage.

Since the memristor 104 is initially in the high resistance state, little or no current flows through either circuit portion 106, 107 until the primary sensor 102 is exposed to the incident electromagnetic radiation. This helps to preserve the charge of the power supply 105 (which may comprise one or more of a battery, supercapacitor and battery-capacitor hybrid) until the sensors 102, 103 actually need to be read out. Examples of suitable applications include lab-on-a-chip platforms for measuring skin chemistry during photoplethysmograph (PPG) or SpO₂ measurements, detection of by-products of light-induced chemical reactions, and safety devices for indicating toxic gas exposure synchronised with the presence of a certain wavelength of light. The sharing of the memristor 104 and power supply 105 between the primary 102 and secondary 103 sensors also serves to reduce the size and complexity of the circuitry.

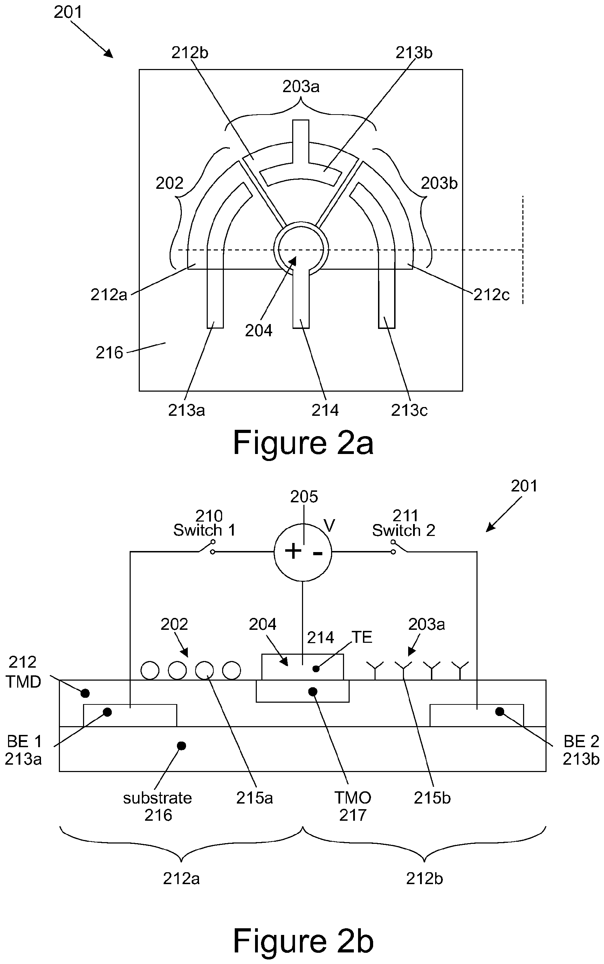

Figures 2a and 2b show another example of the present apparatus 201 in plan view and cross-section, respectively. In this example, the apparatus 201 comprises two secondary sensors 203a,b connected in parallel to the memristor 204, but it could be extended to include any number of secondary sensors 203 configured to sense different physical stimuli. As per the example of Figures 1a and 1b, exposure of the primary sensor 202 to its respective stimulus enables detection of the physical stimuli associated with the secondary sensors 203a,b (with respective switches 210, 211 being used to allow readout of each of the sensors 202, 203a,b independently).

As shown on Figures 2a and 2b, the primary sensor 202, the one or more secondary sensors 203a,b and the memristor 204 share a common channel member 212, and the apparatus 201 comprises source 213a-c and drain 214 electrodes configured to enable a flow of electrical current through the channel member 212 between the source 213a-c and drain 214 electrodes. In this case, electrodes BE1, BE2 and BE3 serve as the source electrodes 213a-c for each of the first, second and third circuit portions, and electrode TE serves as a common drain electrode 214 for all three circuit portions. The channel member and electrodes are supported on a substrate. Furthermore, the memristor material 217 is configured to inhibit or allow the flow of electrical current through the channel member depending on whether the memristor 204 is in the high resistance state or the low resistance state, respectively. In some cases, the apparatus 201 may further comprise a gate electrode (e.g. separated from the lower surface of the channel member 212 by a layer of dielectric material) configured to enable the electrical conductance of the channel member 212 to be controlled by a voltage applied to the gate electrode (not shown). This feature allows the sensitivity of the apparatus 201 to be tuned.

Integration of the primary sensor 202, secondary sensors 203a,b and memristor 204 as a single monolithic device results in a more compact apparatus 201 than existing multifunctional sensors, decreases the number of manufacturing steps and reduces the overall circuit complexity.

The channel member 212 may be formed from one or more two-dimensional materials, such as a transition metal dichalcogenide (TMD) and a graphene-like material. The TMD may comprise one or more of WX₂, MoX₂, ScX₂, TiX₂, HfX₂, ZrX₂, VX₂, CrX₂, MnX₂, FeX₂, COX₂, NiX₂, NbX₂, TcX₂, ReX₂, PdX₂, PtX₂, where X = S, Se or Te; and the graphene-like material may comprise one or more of graphene oxide, phosphorene, silicene, germanene, stanene, h-BN, AIN, GaN, InN, InP, InAs, BP, BAs and GaP. The memristor 204 may be formed from a layer of transition metal oxide (TMO) in contact with a layer of TMD. The TMD may be part of the channel 212 (comprising one or more of the materials listed above); and the TMO may comprise one or more of WOₙ, MoOₙ, ScOₙ, TiOₙ, HfOₙ, ZrOₙ, VOₙ, CrOₙ, MnOₙ, FeOₙ, CoOn, NiOₙ, NbOₙ, where n = 2-3. The electrodes 213a-c, 214 may be formed from a metal or a metal nanoparticle ink comprising one or more of silver, gold, copper, nickel, cobalt. Additionally or alternatively, the electrodes 213a-c, 214 may comprise one or more of a conductive metal oxide, carbon-based material (e.g. graphene), organic material and polymer.

In this example, each of the primary 202 and secondary 203a,b sensors comprise a respective sensitizer 215a,b configured to facilitate the sensing of their respective stimuli. The sensitizer 215a of the primary sensor 202 comprises a quantum dot material configured to generate electron-hole pairs on exposure to incident electromagnetic radiation to produce a detectable change in the electrical current flowing through the channel member 212 which is indicative of one or more of the presence and magnitude of the incident electromagnetic radiation.

On the other hand, the sensitizer 215b of one of the secondary sensors 203a comprises a receptor species configured to bind to a charged chemical or biological species in the surrounding environment such that the charged chemical or biological species is in sufficient proximity to the channel member 212 to cause a detectable change in the electrical current flowing through the channel member 212 which is indicative of one or more of the presence and magnitude of the chemical or biological species.

Although not shown in the figure, the sensitizer of the other secondary sensor 203b may comprise graphene oxide having one or more functional groups attached thereto. The one or more functional groups may be configured to react with water in the surrounding environment to generate protons to produce a detectable change in the electrical current flowing through the channel member 212 which is indicative of one or more of the presence and magnitude of the environmental humidity.

In practice, the primary 202 and secondary 203a,b sensors may be configured to detect any physical stimuli (other examples of which include strain, temperature and pressure). For example, the primary sensor 202 may be a humidity sensor and one of the secondary sensors 203a,b may be a chemical or biological analyte sensor. In this scenario, an increase in humidity may be used to indicate the presence of an aqueous fluid (which may or may not contain the analyte species) and trigger the operation of the secondary sensor 203a,b.

Each sensor 202, 203a,b may have a positive response (i.e. increase in current or decrease in resistance) or negative response (i.e. a decrease in current or increase in resistance) to its respective stimulus depending on the stimulus and sensor materials. Although Figure 2b shows the use of sensitizers 215a,b to facilitate the sensing of the respective stimuli, the channel member 212 may be inherently sensitive to these stimuli. In this scenario, one or more of the sensitizers 215a,b may be omitted, but each "sensor region" 212a-c of the channel member 212 may require a protective coating (not shown) configured to prevent exposure of that region 212a-c to the physical stimuli sensed by the other sensor regions 212a-c. This feature may be particularly beneficial in examples which do not use respective switches 210, 211 to enable electrical readout of each sensor 202, 203a,b independently (see below).

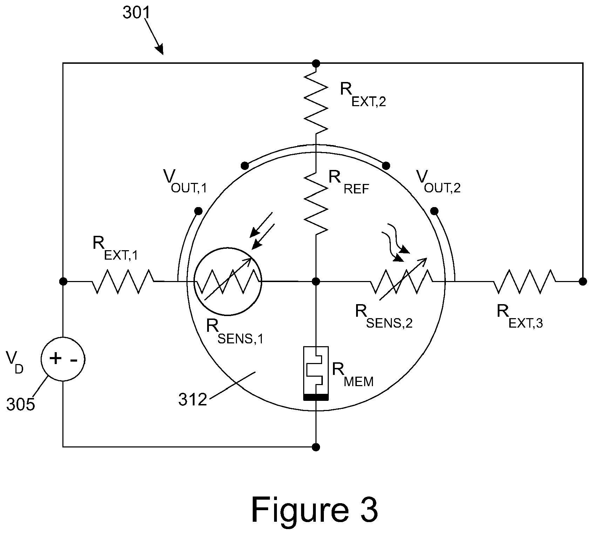

Figure 3 shows another example of the present apparatus 301. In this example, the primary R_{SENS,1} and secondary R_{SENS,2} sensors are connected to one or more resistors such that each respective sensor R_{SENS,1,2} forms part of a resistive bridge circuit configured to enable electrical readout of each sensor R_{SENS,1,2} simultaneously. This configuration allows the sensors R_{SENS,1,2} to be read out by measuring the voltage output of the bridges rather than the current or resistance of the circuit portions.

As shown in Figure 3, the primary sensor R_{SENS,1}, secondary sensor R_{SENS,2}, memristor R_{MEM} and a reference resistor R_{REF} form separate branches of the bridge circuit. The reference resistor R_{REF} is monolithically integrated with the sensors R_{SENS,1,2} and memristor R_{MEM} (i.e. formed using the same channel material 312) so that any changes in the resistance state of the memristor R_{MEM} affect the sensors R_{SENS,1,2} and reference resistor R_{REF} equally. The reference resistor R_{REF} may, however, comprise a protective coating (not shown) so that its resistance remains as stable as possible under the various stimuli. The bridge circuit also comprises three external resistors R_{EXT,1-3} which each form part of a branch of the bridge circuit together with the corresponding sensor R_{SENS,1,2} or reference resistor R_{REF}. Although only one secondary sensor R_{SENS,2} and reference resistor R_{REF} is used in this example, the bridge circuit could be extended to include multiple secondary sensors R_{SENS,2} and reference resistors R_{REF}.

The apparatus 301 of Figure 3 does not require switches to alternately connect the primary R_{SENS,1} and secondary R_{SENS,2} sensors to the power supply 305. Instead, a voltage V_{D} is coupled across the various branches of the circuit at the same time. Initially, the memristor R_{MEM} is in the high resistance state and most of the applied voltage V_{D} is coupled over the memristor branch. When the primary sensor R_{SENS,1} is exposed to its respective stimulus, however, its resistance decreases and the memristor R_{MEM} is switched from the high resistance state to the low resistance state. As a result, the majority of the applied voltage V_{D} becomes coupled over the sensor and resistor branches which are in parallel. The branch with the reference resistor R_{REF} is unaffected by the external stimuli and therefore provides a reference potential defined by the voltage division between the reference resistor R_{REF} and its associated external resistor R_{EXT,2}. Similarly, the applied voltage V_{D} is divided for the two sensor branches (R_{SENS,1}/R_{EXT,1} and R_{SENS,2}/R_{EXT,3}). The primary R_{SENS,1} and secondary R_{SENS,2} sensors can then be read out simultaneously by measuring the difference between the potential at the midpoint of the corresponding sensor branch and the potential at the midpoint of the resistor branch as indicated by the readout voltages V_{OUT,1} and V_{OUT,2}, respectively. Any changes in the resistance of the primary R_{SENS,1} or secondary R_{SENS,2} sensor can therefore be detected as a change in the corresponding output voltage V_{OUT,1,2}.

The external resistors R_{EXT,1-3} of the bridge circuit do not need to be monolithically integrated with the sensors R_{SENS,1,2}, memristor R_{MEM} and reference resistor R_{REF}, and may therefore be discrete components. The use of discrete resistors R_{EXT,1-3} advantageously allows the output voltages V_{OUT,1,2} to be zeroed in the absence of physical stimuli even if the current flowing through each branch is different due to differing sensor materials. This helps to improve the sensitivity of the circuit.

The primary R_{SENS,1} and secondary R_{SENS,2} sensors of Figure 3 could alternatively be read out using a lock-in technique. In this scenario, the primary R_{SENS,1} and secondary R_{SENS,2} sensors are both sensitive to light (e.g. the primary sensor R_{SENS,1} may be a dedicated light sensor and the secondary sensor R_{SENS,2} may be a chemical sensor with a light sensitivity that is dependent upon the chemical environment), and the apparatus 301 comprises a pulsed light source (not shown) configured to illuminate the sensors R_{SENS,1,2} at a predefined frequency and duty cycle to repeatedly switch their resistances. The pulse rate should be sufficiently high (e.g. >100Hz) that the memristor is not switched during the pulsing, but instead should switch only when the light is first applied and remain in that resistance state throughout the entire measurement (i.e. the memristor effectively only experiences the cumulative effect of the pulsing). The resulting output voltages V_{OUT,1,2} will reflect this pulsing signal. As a result, it is then possible to lock each of the output voltages V_{OUT,1,2} to the pulsing signal to detect relatively small variations in the sensor resistances.

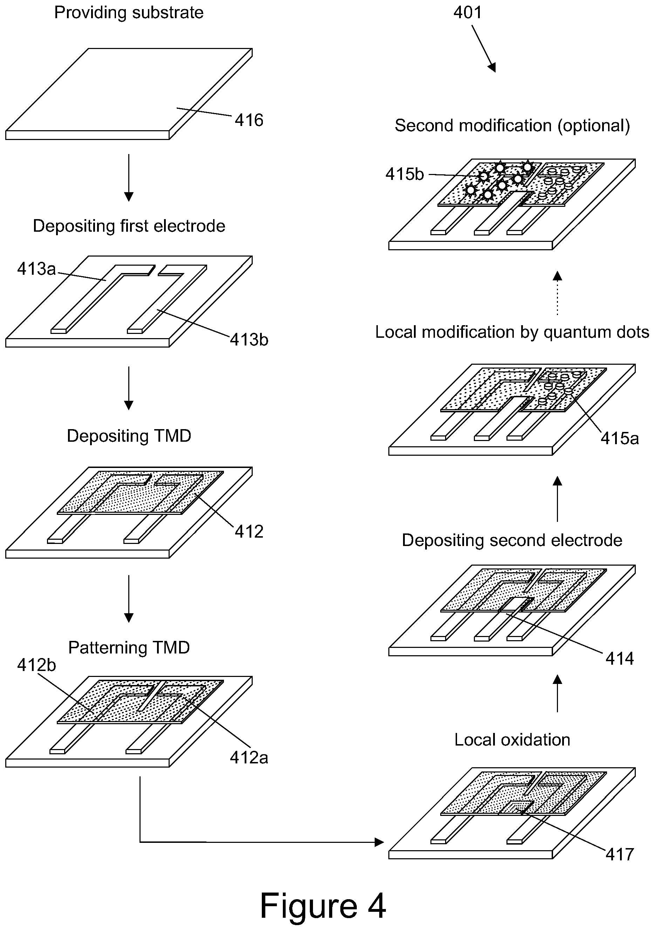

Figure 4 shows one method of making the present apparatus 401. First, a substrate 416 is provided as a structural support for the various components of the apparatus 401. The source electrodes 413a,b are then deposited on top of the supporting substrate 416 using one or more vacuum (e.g. sputtering, atomic layer deposition, chemical vapour deposition or physical vapour deposition) or printing (e.g. dispensing, screen printing, offset printing, gravure printing, flexography, aerosol jet printing or inkjet printing) techniques. A layer of material 412 (e.g. a transition metal dichalcogenide) is then deposited on top of the source electrodes 413a,b (e.g. using one or more of spin-coating, slot die-coating, spray coating, soft lithography, transfer printing, drop-casting, aerosol jet printing, inkjet printing and thin film transfer) to form the channel member, and subsequently patterned to define the respective sensor regions 412a,b. Next, a portion 417 of the channel member is oxidised (e.g. a transition metal oxide) to form the memristor in combination with the channel material 412. The drain electrode 414 is then deposited on top of the supporting substrate 416 such that it overlies the memristor. The primary sensor region 412a of the channel member is then coated with a sensitizer 415a (in this case a quantum dot material) to form the primary sensor. A sensitizer 415b may also be deposited on top of the secondary sensor region 412b to form the secondary sensor. Rather than depositing a sensitizer 415a,b on top of the primary or secondary sensors, the sensor regions 412a,b of the channel member 412 could be modified by chemical (e.g. doping or redox reactions) or physical (e.g. plasma, e-beam, ultraviolet ozone or laser) treatment. As mentioned previously, however, the primary and secondary sensor regions 412a,b may be intrinsically sensitive to the respective stimuli without the need for modification.

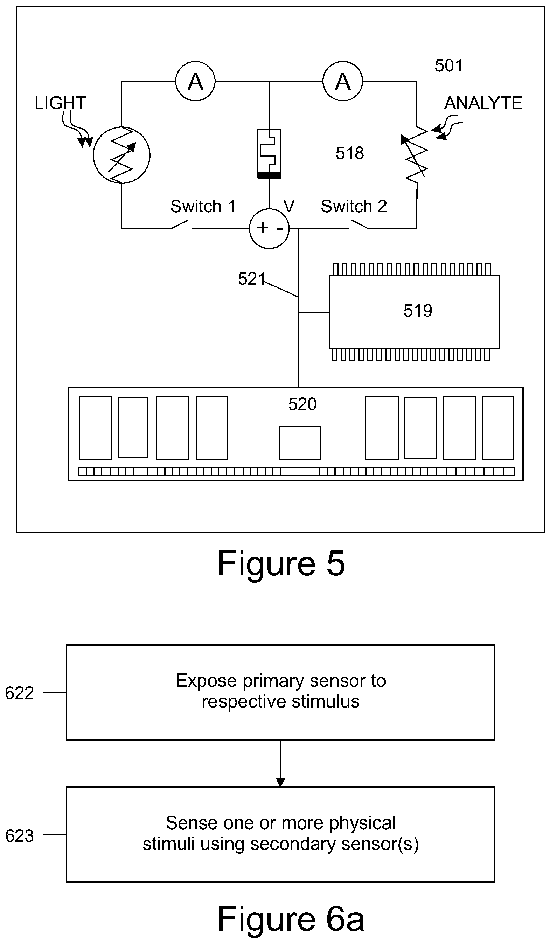

Figure 5 shows another example of the present apparatus 501. The apparatus 501 may be one or more of an electronic device, a portable electronic device, a portable telecommunications device, a mobile phone, a personal digital assistant, a tablet, a phablet, a desktop computer, a laptop computer, a server, a smartphone, a smartwatch, smart eyewear, a multifunctional sensor, and a module for one or more of the same. In the example shown, the apparatus 501 comprises the various components described previously (denoted collectively by reference numeral 518), a processor 519 and a storage medium 520, which are electrically connected to one another by a data bus 521.

The processor 519 is configured for general operation of the apparatus 501 by providing signalling to, and receiving signalling from, the other components to manage their operation. The storage medium 520 is configured to store computer code configured to perform, control or enable operation of the apparatus 501. The storage medium 520 may also be configured to store settings for the other components. The processor 519 may access the storage medium 520 to retrieve the component settings in order to manage the operation of the other components.

Based on the voltages applied by the power supply and the currents measured by the ammeters, the resistance of each circuit portion can be calculated by the processor 519 and used to determine one or more of the presence and magnitude of the respective stimuli. In some embodiments, the processor 519 may just use the current measurements directly rather than calculating the resistance of each circuit portion. Furthermore, if the apparatus 501 comprises a resistive bridge circuit, the processor 519 may be configured to determine the presence/magnitude of the respective stimuli based on the output voltages associated with the sensors. In order to determine the presence/magnitude of the respective stimuli, the processor 519 may use predetermined calibration data saved in the storage medium 520 which correlates the magnitude of the stimuli with the resistance, current or voltage of the corresponding circuit portion/branch.

The processor 519 may be a microprocessor, including an Application Specific Integrated Circuit (ASIC). The storage medium 520 may be a temporary storage medium such as a volatile random access memory. On the other hand, the storage medium 520 may be a permanent storage medium such as a hard disk drive, a flash memory, or a non-volatile random access memory.

Figure 6a shows schematically the main steps 622-623 of a method of using the present apparatus. The method generally comprises: exposing the primary sensor to its respective stimulus 622; and sensing one or more physical stimuli using the secondary sensor(s) 623.

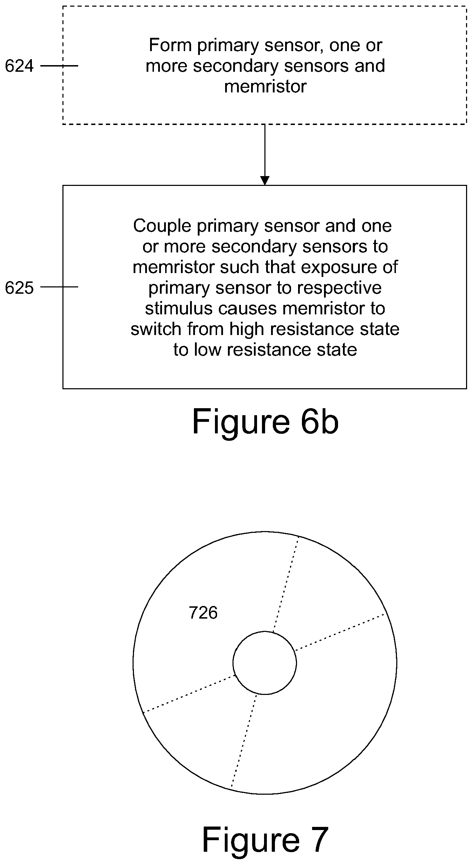

Figure 6b shows schematically the main steps 624-625 of a method of making the present apparatus. The method generally comprises: forming the primary sensor, one or more secondary sensors and memristor 624; and coupling the primary sensor and one or more secondary sensors to the memristor such that exposure of the primary sensor to its respective stimulus causes the memristor to switch from a high resistance state to a low resistance state 625. As indicated by the dashed box, step 624 may be performed separately from step 625 and is therefore optional.

Figure 7 illustrates schematically a computer/processor readable medium 726 providing a computer program according to one embodiment. The computer program may comprise computer code configured to perform, control or enable one or more of the method steps 622-625 of Figure 6a or 6b. In this example, the computer/processor readable medium 726 is a disc such as a digital versatile disc (DVD) or a compact disc (CD). In other embodiments, the computer/processor readable medium 726 may be any medium that has been programmed in such a way as to carry out an inventive function. The computer/processor readable medium 726 may be a removable memory device such as a memory stick or memory card (SD, mini SD, micro SD or nano SD).

Other embodiments depicted in the figures have been provided with reference numerals that correspond to similar features of earlier described embodiments. For example, feature number 1 can also correspond to numbers 101, 201, 301 etc. These numbered features may appear in the figures but may not have been directly referred to within the description of these particular embodiments. These have still been provided in the figures to aid understanding of the further embodiments, particularly in relation to the features of similar earlier described embodiments.

It will be appreciated to the skilled reader that any mentioned apparatus/device and/or other features of particular mentioned apparatus/device may be provided by apparatus arranged such that they become configured to carry out the desired operations only when enabled, e.g. switched on, or the like. In such cases, they may not necessarily have the appropriate software loaded into the active memory in the non-enabled (e.g. switched off state) and only load the appropriate software in the enabled (e.g. on state). The apparatus may comprise hardware circuitry and/or firmware. The apparatus may comprise software loaded onto memory. Such software/computer programs may be recorded on the same memory/processor/functional units and/or on one or more memories/processors/functional units.

In some embodiments, a particular mentioned apparatus/device may be pre-programmed with the appropriate software to carry out desired operations, and wherein the appropriate software can be enabled for use by a user downloading a "key", for example, to unlock/enable the software and its associated functionality. Advantages associated with such embodiments can include a reduced requirement to download data when further functionality is required for a device, and this can be useful in examples where a device is perceived to have sufficient capacity to store such pre-programmed software for functionality that may not be enabled by a user.

It will be appreciated that any mentioned apparatus/circuitry/elements/processor may have other functions in addition to the mentioned functions, and that these functions may be performed by the same apparatus/circuitry/elements/processor. One or more disclosed aspects may encompass the electronic distribution of associated computer programs and computer programs (which may be source/transport encoded) recorded on an appropriate carrier (e.g. memory, signal).

It will be appreciated that any "computer" described herein can comprise a collection of one or more individual processors/processing elements that may or may not be located on the same circuit board, or the same region/position of a circuit board or even the same device. In some embodiments one or more of any mentioned processors may be distributed over a plurality of devices. The same or different processor/processing elements may perform one or more functions described herein.

It will be appreciated that the term "signalling" may refer to one or more signals transmitted as a series of transmitted and/or received signals. The series of signals may comprise one, two, three, four or even more individual signal components or distinct signals to make up said signalling. Some or all of these individual signals may be transmitted/received simultaneously, in sequence, and/or such that they temporally overlap one another.

With reference to any discussion of any mentioned computer and/or processor and memory (e.g. including ROM, CD-ROM etc), these may comprise a computer processor, Application Specific Integrated Circuit (ASIC), field-programmable gate array (FPGA), and/or other hardware components that have been programmed in such a way to carry out the inventive function.

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the claims.

While there have been shown and described and pointed out fundamental novel features as applied to different embodiments thereof, it will be understood that various omissions and substitutions and changes in the form and details of the devices and methods described may be made by those skilled in the art without departing from the scope of the claims. Moreover, it should be recognized that structures and/or elements and/or method steps shown and/or described in connection with any disclosed form or embodiment may be incorporated in any other disclosed or described or suggested form or embodiment as a general matter of design choice. Furthermore, in the claims means-plus-function clauses are intended to cover the structures described herein as performing the recited function and not only structural equivalents, but also equivalent structures. Thus although a nail and a screw may not be structural equivalents in that a nail employs a cylindrical surface to secure wooden parts together, whereas a screw employs a helical surface, in the environment of fastening wooden parts, a nail and a screw may be equivalent structures.

## Claims

1. An apparatus (101) comprising:
a primary sensor (102) and one or more secondary sensors (103);
a memristor (104); and
a power supply (105),
wherein the primary sensor (102) and the one or more secondary sensors (103) are configured to sense different physical stimuli when connected to the power supply (105),
wherein the primary sensor (102) is a resistive sensor configured to exhibit a decrease in resistance on exposure to its respective stimulus, and
wherein the primary sensor (102) and one or more of the secondary sensors (103) are coupled to the memristor (104) such that the decrease in resistance caused by exposure of the primary sensor (102) to its respective stimulus allows a voltage from the power supply (105) to be applied to the memristor (104) so as to switch the memristor (104) from a high resistance state to a low resistance state, thereby resulting in connection of the power supply (105) to the one or more secondary sensors (103) to enable the sensing of their respective stimuli.

2. The apparatus (101) of claim 1, wherein the apparatus (101) is configured such that the power supply (105) also provides power to the primary sensor (102) to enable the sensing of its respective stimulus.

3. The apparatus (201) of claim 1 or 2, wherein the apparatus (201) comprises two or more secondary sensors (203a,b) configured to sense different physical stimuli.

4. The apparatus (201) of any preceding claim, wherein the primary sensor (202), the one or more secondary sensors (203a,b) and the memristor (204) share a common channel member (212), and the apparatus (201) comprises source (213a-c) and drain (214) electrodes configured to enable a flow of electrical current through the channel member (212) between the source (213a-c) and drain (214) electrodes, and wherein the memristor (204) is configured to inhibit or allow the flow of electrical current depending on whether the memristor (204) is in the high resistance state or the low resistance state, respectively.

5. The apparatus (201) of claim 4, wherein at least one of the primary (202) and one or more secondary sensors (203a,b) comprises a respective sensitizer (215a,b) configured to facilitate the sensing of their respective stimulus.

6. The apparatus (201) of claim 5, wherein the sensitizer (215a) of one or more of the sensors (202) comprises a quantum dot material configured to generate electron-hole pairs on exposure to incident electromagnetic radiation to produce a detectable change in the electrical current flowing through the channel member (212) which is indicative of one or more of the presence and magnitude of the incident electromagnetic radiation.

7. The apparatus (201) of claim 5 or 6, wherein the sensitizer of one or more of the sensors (203b) comprises graphene oxide having one or more functional groups attached thereto, the one or more functional groups configured to react with water in the surrounding environment to generate protons to produce a detectable change in the electrical current flowing through the channel member (212) which is indicative of one or more of the presence and magnitude of the environmental humidity.

8. The apparatus (201) of any of claims 5 to 7, wherein the sensitizer (215b) of one or more of the sensors (203a) comprises a receptor species configured to bind to a charged chemical or biological species in the surrounding environment such that the charged chemical or biological species is in sufficient proximity to the channel member (212) to cause a detectable change in the electrical current flowing through the channel member (212) which is indicative of one or more of the presence and magnitude of the chemical or biological species.

9. The apparatus (101) of any preceding claim, wherein the apparatus (101) comprises a respective switch (110, 111) connected between the power supply (105) and each of the primary (102) and secondary (103) sensors to enable electrical readout of each sensor (102, 103) independently.

10. The apparatus (301) of any of claims 1 to 8, wherein the primary sensor (R_{SENS,1}) and one or more of the secondary sensors (R_{SENS,2}) are connected to one or more resistors (R_{EXT1,3}) such that each respective sensor (R_{SENS1,2}) forms part of a resistive bridge circuit configured to enable electrical readout of each sensor (R_{SENS1,2}) simultaneously.

11. The apparatus (301) of claim 10, wherein the primary (R_{SENS,1}) and secondary (R_{SENS,2}) sensors are sensitive to light, and the apparatus comprises a pulsed light source configured to illuminate the sensors (R_{SENS1,2}) at a predefined frequency and duty cycle such that they can be read out using a lock-in technique.

12. The apparatus (301) of any preceding claim, wherein at least one of the primary (R_{SENS,1}) and one or more secondary (R_{SENS,2}) sensors comprises a protective coating configured to prevent exposure of the sensor (R_{SENS,1}) to the physical stimuli sensed by the other sensors (R_{SENS,2}).

13. A method of using an apparatus (101),
the apparatus (101) comprising a primary sensor (102) and one or more secondary sensors (103); a memristor (104); and a power supply (105), wherein the primary sensor (102) and the one or more secondary sensors (103) are configured to sense different physical stimuli when connected to the power supply (105), wherein the primary sensor (102) is a resistive sensor configured to exhibit a decrease in resistance on exposure to its respective stimulus, and wherein the primary sensor (102) and one or more secondary sensors (103) are coupled to the memristor (104) such that the decrease in resistance caused by exposure of the primary sensor (102) to its respective stimulus allows a voltage from the power supply (105) to be applied to the memristor (104) to switch the memristor (104) from a high resistance state to a low resistance state resulting in connection of the power supply (105) to the one or more secondary sensors (103) to enable the sensing of their respective stimuli,
the method comprising sensing (623) one or more physical stimuli using the secondary sensor(s) (103) on exposure (622) of the primary sensor (102) to its respective stimulus.

14. A method of making an apparatus (101),
the apparatus (101) comprising a primary sensor (102) and one or more secondary sensors (103); a memristor (104); and a power supply (105), wherein the primary sensor (102) and the one or more secondary sensors (103) are configured to sense different physical stimuli when connected to a power supply (105), and wherein the primary sensor (102) is a resistive sensor configured to exhibit a decrease in resistance on exposure to its respective stimulus,
the method comprising coupling (625) the primary sensor (102) and one or more secondary sensors (103) to the memristor (104) such that the decrease in resistance caused by exposure of the primary sensor (102) to its respective stimulus allows a voltage from the power supply (105) to be applied to the memristor (104) to switch the memristor (104) from a high resistance state to a low resistance state resulting in connection of the power supply (105) to the one or more secondary sensors (103) to enable the sensing of their respective stimuli.

15. A computer program product (726) comprising instructions to cause the apparatus (101) of claim 1 to execute the steps of claim 13.

## Patentansprüche

1. Vorrichtung (101), Folgendes umfassend:
einen Primärsensor (102) und einen oder mehrere Sekundärsensoren (103); einen Memristor (104); und
eine Stromversorgung (105),
wobei der Primärsensor (102) und der eine oder die mehreren Sekundärsensoren (103) so konfiguriert sind, dass sie verschiedene physikalische Reize erfassen, wenn sie an der Stromversorgung (105) angeschlossen sind,
wobei der Primärsensor (102) ein Widerstandssensor ist, der so konfiguriert ist, dass er eine Widerstandsabnahme bei einer Aussetzung an seinen jeweiligen Reiz aufweist, und
wobei der Primärsensor (102) und der eine oder die mehreren der Sekundärsensoren (103) mit dem Memristor (104) gekoppelt sind, so dass die Widerstandsabnahme, die durch die Aussetzung des Primärsensors (102) an seinen jeweiligen Reiz verursacht wird, ermöglicht,
dass eine Spannung von der Stromversorgung (105) an den Memristor (104) angelegt wird, um den Memristor (104) von einem Zustand mit hohem Widerstand in einen Zustand mit niedrigem Widerstand zu schalten, wobei dadurch die Stromversorgung (105) mit dem einen oder den mehreren Sekundärsensoren (103) verbunden wird, um das Erfassen ihrer jeweiligen Reize zu ermöglichen.

2. Vorrichtung (101) nach Anspruch 1, wobei die Vorrichtung (101) so konfiguriert ist, dass die Stromversorgung (105) auch eine Stromversorgung des Primärsensors (102) bereitstellt, um das Erfassen seines jeweiligen Reizes zu ermöglichen.

3. Vorrichtung (201) nach Anspruch 1 oder 2, wobei die Vorrichtung (201) zwei oder mehr Sekundärsensoren (203a, b) umfasst, die so konfiguriert sind, dass sie unterschiedliche physikalische Reize erfassen.

4. Vorrichtung (201) nach einem der vorhergehenden Ansprüche, wobei der Primärsensor (202), der eine oder die mehreren Sekundärsensoren (203a, b) und der Memristor (204) ein gemeinsames Kanalelement (212) teilen, und die Vorrichtung (201) Source- (213a-c) und Drain-Elektroden (214) umfasst, die so konfiguriert sind, dass sie einen Fluss von elektrischer Stromstärke durch das Kanalelement (212) zwischen den Source- (213a-c) und den Drain-Elektroden (214) ermöglichen, und wobei der Memristor (204) so konfiguriert ist, dass er den Fluss von elektrischer Stromstärke in Abhängigkeit davon, ob sich der Memristor (204) in dem Zustand mit hohem Widerstand oder in dem Zustand mit niedrigem Widerstand befindet, unterbindet beziehungsweise ermöglicht.

5. Vorrichtung (201) nach Anspruch 4, wobei der Primärsensor (202) und/oder der eine oder die mehreren Sekundärsensoren (203a, b) einen jeweiligen Sensibilisierer (215a, b) umfassen, der so konfiguriert ist, dass er das Erfassen ihrer jeweiligen Reize ermöglicht.

6. Vorrichtung (201) nach Anspruch 5, wobei der Sensibilisierer (215a) eines oder mehrerer der Sensoren (202) ein Quantenpunktmaterial umfasst, das so konfiguriert ist, dass es Elektronlochpaare bei einer Aussetzung an auftreffende elektromagnetische Strahlung erzeugt, um eine nachweisbare Änderung der durch das Kanalelement (212) fließenden elektrischen Stromstärke herzustellen, die auf das Vorliegen und/oder die Größe der auftreffenden elektromagnetischen Strahlung hinweist.

7. Vorrichtung (201) nach Anspruch 5 oder 6, wobei der Sensibilisierer eines oder mehrerer der Sensoren (203b) Graphenoxid mit einer oder mehreren funktionellen daran angelagerten Gruppen umfasst, wobei die eine oder die mehreren funktionellen Gruppen so konfiguriert sind, dass sie mit Wasser in der Umgebung reagieren, um Protonen zu erzeugen, um eine nachweisbare Änderung der durch das Kanalelement (212) fließenden elektrischen Stromstärke herzustellen, die auf das Vorliegen und/oder die Größe der Umgebungsfeuchtigkeit hinweist.

8. Vorrichtung (201) nach einem der Ansprüche 5 bis 7, wobei der Sensibilisierer (215b) eines oder mehrerer der Sensoren (203a) eine Rezeptorspezies umfasst, die so konfiguriert, dass sie eine geladene chemische oder biologische Spezies in der Umgebung bindet, sodass die geladene chemische oder biologische Spezies sich in ausreichender Nähe des Kanalelements (212) befindet, um eine nachweisbare Änderung der durch das Kanalelement (212) fließenden elektrischen Stromstärke zu bewirken, die auf das Vorliegen und/oder die Größe der chemischen oder biologischen Spezies hinweist.

9. Vorrichtung (101) nach einem der vorhergehenden Ansprüche, wobei die Vorrichtung (101) einen jeweiligen Schalter (110, 111) umfasst, der zwischen der Stromversorgung (105) und jedem des Primärsensors (102) und der Sekundärsensoren (103) verbunden ist, um das unabhängige elektrische Auslesen jedes Sensors (102, 103) zu ermöglichen.

10. Vorrichtung (301) nach einem der Ansprüche 1 bis 8, wobei der Primärsensor (R_{SENS,1}) und einer oder mehrere der Sekundärsensoren (R_{SENS,2}) mit einem oder mehreren der Widerstände (R_{EXT1,3}) verbunden sind, sodass jeder jeweilige Sensor (R_{SENS1,2}) einen Teil einer Widerstandsbrückenschaltung ausbildet, die so konfiguriert, dass sie ein gleichzeitiges elektrisches Auslesen eines jeden Sensors (R_{SENS1,2}) ermöglicht.

11. Vorrichtung (301) nach Anspruch 10, wobei der Primär(R_{SENS,1})sensor und die Sekundär(R_{SENS,2})sensoren lichtempfindlich sind und die Vorrichtung eine gepulste Lichtquelle umfasst, die so konfiguriert ist, dass sie die Sensoren (R_{SENS1,2}) mit einer vordefinierten Frequenz und einem Arbeitszyklus beleuchtet, so dass sie unter Verwendung einer Einrasttechnik ausgelesen werden können.

12. Vorrichtung (301) nach einem der vorhergehenden Ansprüche, wobei der Primärsensor (R_{SENS,1}) und/oder der eine oder die mehreren Sekundärsensoren (R_{SENS,2}) eine Schutzschicht umfassen, die so konfiguriert ist, dass sie eine Aussetzung des Sensors (R_{SENS,1}) an die physikalischen Reize, die von den anderen Sensoren (R_{SENS,2}) erfasst werden, verhindert.

13. Verfahren zum Verwenden einer Vorrichtung (101),
wobei die Vorrichtung (101) einen Primärsensor (102) und einen oder mehrere Sekundärsensoren (103); einen Memristor (104); und eine Stromversorgung (105) umfasst, wobei der Primärsensor (102) und der eine oder die mehreren Sekundärsensoren (103) so konfiguriert sind, dass sie verschiedene physikalische Reize erfassen, wenn sie an der Stromversorgung (105) angeschlossen sind, wobei der Primärsensor (102) ein Widerstandssensor ist, der so konfiguriert ist, dass er eine Widerstandsabnahme bei einer Aussetzung an seinen jeweiligen Reiz aufweist, undwobei der Primärsensor (102) und der eine oder die mehreren Sekundärsensoren (103) mit dem Memristor (104) gekoppelt sind, so dass die Widerstandsabnahme, die durch die Aussetzung des Primärsensors (102) an seinen jeweiligen Reiz verursacht wird, ermöglicht, dass eine Spannung von der Stromversorgung (105) an den Memristor (104) angelegt wird, um den Memristor (104) von einem Zustand mit hohem Widerstand in einen Zustand mit niedrigem Widerstand zu schalten, was dazu führt, dass die Stromversorgung (105) mit dem einen oder den mehreren Sekundärsensoren (103) verbunden wird, um das Erfassen ihrer jeweiligen Reize zu ermöglichen,
wobei das Verfahren das Erfassen (623) eines oder mehrerer physikalischer Reize unter Verwendung des Sekundärsensors/der Sekundärsensoren (103) bei einem Aussetzen (622) des Primärsensors (102) an seinen jeweiligen Reiz umfasst.

14. Verfahren zum Herstellen einer Vorrichtung (101),
wobei die Vorrichtung (101) einen Primärsensor (102) und einen oder mehrere Sekundärsensoren (103); einen Memristor (104); und eine Stromversorgung (105) umfasst, wobei der Primärsensor (102) und der eine oder die mehreren Sekundärsensoren (103) so konfiguriert sind, dass sie verschiedene physikalische Reize erfassen, wenn sie an eine Stromversorgung (105) angeschlossen sind, und wobei der Primärsensor (102) ein Widerstandssensor ist, der so konfiguriert ist, dass er eine Widerstandsabnahme bei einer Aussetzung an seinen jeweiligen Reiz aufweist,
wobei das Verfahren das Koppeln (625) des Primärsensors (102) und des einen oder der mehreren Sekundärsensoren (103) mit dem Memristor (104) umfasst, so dass die Widerstandsabnahme, die durch die Aussetzung des Primärsensors (102) an seinen jeweiligen Reiz verursacht wird, ermöglicht, dass eine Spannung von der Stromversorgung (105) an den Memristor (104) angelegt wird, um den Memristor (104) von einem Zustand mit hohem Widerstand in einen Zustand mit niedrigem Widerstand zu schalten, was dazu führt, dass die Stromversorgung (105) mit dem einen oder den mehreren Sekundärsensoren (103) verbunden wird, um das Erfassen ihrer jeweiligen Reize zu ermöglichen.

15. Computerprogrammprodukt (726), das Anweisungen umfasst, die bewirken, dass die Vorrichtung (101) nach Anspruch 1 die Schritte nach Anspruch 13 ausführt.

## Revendications

1. Appareil (101) comprenant :
un capteur primaire (102) et un ou plusieurs capteurs secondaires (103) ; un memristor (104) ; et
une alimentation électrique (105),
dans lequel le capteur primaire (102) et le ou les capteurs secondaires (103) sont configurés pour détecter différents stimuli physiques lorsqu'ils sont connectés à l'alimentation électrique (105),
dans lequel le capteur primaire (102) est un capteur résistif configuré pour présenter une diminution de la résistance lors de l'exposition à son stimulus respectif, et
dans lequel le capteur primaire (102) et un ou plusieurs des capteurs secondaires (103) sont couplés au memristor (104) de sorte que la diminution de la résistance provoquée par l'exposition du capteur primaire (102) à son stimulus respectif permette qu'une tension provenant de l'alimentation électrique (105) soit appliquée au memristor (104) de manière à faire basculer le memristor (104) d'un état de haute résistance à un état de faible résistance, ce qui entraîne la connexion de l'alimentation électrique (105) à un ou plusieurs capteurs secondaires (103) pour permettre la détection de leurs stimuli respectifs.

2. Appareil (101) selon la revendication 1, dans lequel l'appareil (101) est configuré de sorte que l'alimentation (105) alimente également le capteur primaire (102) pour permettre la détection de son stimulus respectif.

3. Appareil (201) selon la revendication 1 ou 2, dans lequel l'appareil (201) comprend au moins deux capteurs secondaires (203a, b) configurés pour détecter différents stimuli physiques.

4. Appareil (201) selon l'une quelconque des revendications précédentes, dans lequel le capteur primaire (202), le ou les capteurs secondaires (203a, b) et le memristor (204) partagent un élément de canal commun (212), et l'appareil (201) comprend des électrodes de source (213a-c) et de drain (214) configurées pour permettre un flux de courant électrique à travers l'élément de canal (212) entre les électrodes de source (213a-c) et de drain (214), et dans lequel le memristor (204) est configuré pour inhiber ou permettre la circulation du courant électrique selon que le memristor (204) est dans l'état de haute résistance ou dans l'état de faible résistance, respectivement.

5. Appareil (201) selon la revendication 4, dans lequel au moins le capteur primaire (202) et un ou plusieurs capteurs secondaires (203a, b) comprennent un sensibilisateur (215a, b) correspondant configuré pour faciliter la détection de leurs stimuli respectifs.

6. Appareil (201) selon la revendication 5, dans lequel le sensibilisateur (215a) d'un ou de plusieurs des capteurs (202) comprend un matériau à points quantiques configuré pour générer des paires électron-trou lors de l'exposition à un rayonnement électromagnétique incident afin de produire une modification détectable du courant électrique circulant à travers l'élément de canal (212), laquelle indique la présence et/ou l'intensité du rayonnement électromagnétique incident.

7. Appareil (201) selon la revendication 5 ou 6, dans lequel le sensibilisateur d'un ou de plusieurs des capteurs (203b) comprend de l'oxyde de graphène ayant un ou plusieurs groupes fonctionnels qui y sont attachés, le ou les groupes fonctionnels étant configurés pour réagir avec l'eau du milieu ambiant afin de générer des protons dans le but de produire une modification détectable du courant électrique circulant à travers l'élément de canal (212), laquelle indique la présence et/ou l'intensité du rayonnement électromagnétique incident.

8. Appareil (201) selon l'une quelconque des revendications 5 à 7, dans lequel le sensibilisateur (215b) d'un ou de plusieurs des capteurs (203a) comprend une espèce de récepteur configurée pour se lier à une espèce chimique ou biologique chargée dans le milieu ambiant de sorte que l'espèce chimique ou biologique chargée soit suffisamment proche de l'élément de canal (212) pour provoquer une modification détectable du courant électrique circulant à travers l'élément de canal (212), laquelle indique la présence et/ou l'intensité de l'espèce chimique ou biologique.

9. Appareil (101) selon l'une quelconque des revendications précédentes, dans lequel l'appareil (101) comprend un commutateur respectif (110, 111) connecté entre l'alimentation électrique (105) et chacun des capteurs primaire (102) et secondaire (103) pour permettre la lecture par voie électrique de chaque capteur (102, 103) indépendamment.

10. Appareil (301) selon l'une quelconque des revendications 1 à 8, dans lequel le capteur primaire (R_{SENS,1}) et un ou plusieurs des capteurs secondaires (R_{SENS,2}) sont connectés à une ou plusieurs résistances (R_{EXT1,3}) de sorte que chaque capteur respectif (R_{SENS1,2}) fasse partie d'un circuit à pont résistif configuré pour permettre la lecture par voie électrique de chaque capteur (R_{SENS1,2}) simultanément.

11. Appareil (301) selon la revendication 10, dans lequel les capteurs primaire (R_{SENS,1}) et secondaire (R_{SENS,2}) sont sensibles à la lumière, et l'appareil comprend une source de lumière pulsée configurée pour éclairer les capteurs (R_{SENS1,2}) à une fréquence et selon un rapport de cycle prédéfinis, de sorte qu'ils puissent être lus à l'aide d'une technique de verrouillage.

12. Appareil (301) selon l'une quelconque des revendications précédentes, dans lequel au moins le capteur primaire (R_{SENS,1}) et un ou plusieurs capteurs secondaires (R_{SENS,2}) comprennent un revêtement de protection conçu pour empêcher l'exposition du capteur (R_{SENS,1}) aux stimuli physiques détectés par les autres capteurs (R_{SENS,2}).

13. Procédé d'utilisation d'un appareil (101),
l'appareil (101) comprenant un capteur primaire (102) et un ou plusieurs capteurs secondaires (103) ; un memristor (104) ; et une alimentation électrique (105), dans lequel le capteur primaire (102) et le ou les capteurs secondaires (103) sont configurés pour détecter différents stimuli physiques lorsqu'ils sont connectés à l'alimentation électrique (105), dans lequel le capteur primaire (102) est un capteur résistif configuré pour présenter une diminution de la résistance lors de l'exposition à son stimulus respectif, et dans lequel le capteur primaire (102) et un ou plusieurs capteurs secondaires (103) sont couplés au memristor (104) de sorte que la diminution de la résistance provoquée par l'exposition du capteur primaire (102) à son stimulus respectif permette qu'une tension provenant de l'alimentation électrique (105) soit appliquée au memristor (104), afin de faire basculer le memristor (104) d'un état de haute résistance à un état de faible résistance, ce qui entraîne la connexion de l'alimentation électrique (105) à un ou plusieurs capteurs secondaires (103) pour permettre la détection de leurs stimuli respectifs, le procédé consistant à détecter (623) un ou plusieurs stimuli physiques à l'aide du ou des capteurs secondaires (103) lors de l'exposition (622) du capteur primaire (102) à son stimulus respectif.

14. Procédé de fabrication d'un appareil (101),
l'appareil (101) comprenant un capteur primaire (102) et un ou plusieurs capteurs secondaires (103) ; un memristor (104) ; et une alimentation électrique (105), dans lequel le capteur primaire (102) et le ou les capteurs secondaires (103) sont configurés pour détecter différents stimuli physiques lorsqu'ils sont connectés à une alimentation électrique (105), et dans lequel le capteur primaire (102) est un capteur résistif configuré pour présenter une diminution de la résistance lors de l'exposition à son stimulus respectif,
le procédé comprenant le couplage (625) du capteur primaire (102) et d'un ou de plusieurs capteurs secondaires (103) au memristor (104) de sorte que la diminution de la résistance provoquée par l'exposition du capteur primaire (102) à son stimulus respectif permette qu'une tension provenant de l'alimentation électrique (105) soit appliquée au memristor (104) afin de faire basculer le memristor (104) d'un état de haute résistance à un état de faible résistance, ce qui entraîne la connexion de l'alimentation électrique (105) à un ou plusieurs capteurs secondaires (103) pour permettre la détection de leurs stimuli respectifs.

15. Produit de programme informatique (726) comprenant des instructions permettant à l'appareil (101) selon la revendication 1 d'exécuter les étapes de la revendication 13.
